# FASCICULE DE BREVET EUROPEEN

(11) **EP 3 239 695 B1**
(45) Date de publication et mention de la délivrance du brevet: **09.02.2022**
(21) Numéro de dépôt: 17168543.1
(22) Date de dépôt: 27.04.2017
(51) Int. Cl.: G01N 21/77, G02B 6/42, G01N 21/64

(54) **DISPOSITIF DE DÉTECTION D'UNE SUBSTANCE DANS UN FLUIDE**
VORRICHTUNG ZUR ERFASSUNG EINER SUBSTANZ IN EINER FLÜSSIGKEIT
DEVICE FOR DETECTING A SUBSTANCE IN A FLUID

(30) Priorité: 29.04.2016 FR 1653899
(43) Date de publication de la demande: 01.11.2017
(73) Titulaire: Commissariat à l'Energie Atomique et aux Energies Alternatives, 75015 Paris (FR)
(72) Inventeur: HUE, Jean, 38240 MEYLAN (FR); HAMM, Stephan, 52499 BAESWEILER (DE)
(74) Mandataire: Cabinet Beaumont

(56) Documents cités:
- EP-A1- 2 565 623
- US-A1- 2010 320 363
- US-A1- 2011 008 210
- US-A1- 2013 114 076

## Description

### Domaine

La présente demande concerne un dispositif de détection d'une substance dans un fluide. Elle vise plus particulièrement un dispositif d'analyse optique du type comportant un ou plusieurs plots d'un matériau sonde, dont les propriétés optiques sont susceptibles d'être modifiées en présence d'une substance cible dont on cherche à détecter la présence éventuelle dans le fluide.

### Exposé de l'art antérieur

On a proposé des méthodes d'analyse optique d'un fluide (liquide ou gaz) dans lesquelles le fluide est placé dans une chambre ou enceinte sur une paroi interne de laquelle sont disposés des plots d'un matériau sonde. Le matériau sonde est adapté, lorsqu'il est mis en contact avec une substance cible dont on cherche à détecter la présence éventuelle dans le fluide, à réagir avec cette substance de manière à modifier les propriétés optiques des plots, par exemple leur absorbance, leur fluorescence ou leur phosphorescence. La mesure des propriétés optiques des plots sondes, au moyen d'une source lumineuse agencée pour éclairer les plots et d'un détecteur optique agencé pour mesurer un signal lumineux renvoyé par les plots, permet de détecter la présence éventuelle de la substance cible dans le fluide, et, selon le cas, de mesurer sa concentration.

Les dispositifs existants adaptés à mettre en œuvre des méthodes d'analyse fluidique de ce type sont toutefois relativement complexes, encombrants, et onéreux. Il existe un besoin pour un dispositif adapté à la mise en œuvre de techniques d'analyse optique de fluides, qui soit plus simple, plus compact, et/ou moins onéreux que les dispositifs connus.

Le document EP 2 565 623 A1 décrit un dispositif de mesure optique de matériaux, utilisant un multiplexage de la lumière, et le document US 2010/0320363 A1 décrit un capteur optique pour mesurer une émission lumineuse d'un analyte.

### Résumé

Ainsi, un mode de réalisation prévoit un dispositif de détection d'une substance dans un fluide, comportant des première et deuxième lames transparentes délimitant une chambre destinée à contenir le fluide ; sur la face intérieure de la première lame, un ou plusieurs plots d'un matériau sonde dont les propriétés optiques varient en fonction de la concentration d'une substance cible dont on cherche à détecter la présence éventuelle dans le fluide ; et un dispositif d'éclairage comportant une troisième lame transparente sensiblement parallèle à la première lame et disposée du côté de la chambre opposé à la première lame, dont une face tournée vers la première lame comporte une ou plusieurs régions micro-structurées d'extraction lumineuse localisées en vis-à-vis des plots. Ledit motif lumineux produit par le dispositif d'éclairage est tel que seuls les plots soient éclairés par la lumière en provenance de la source d'excitation.

Selon un mode de réalisation, le dispositif d'éclairage comprend une ou plusieurs sources lumineuses disposées en regard d'une ou plusieurs faces latérales de la troisième lame.

Selon un mode de réalisation, lesdites sources lumineuses sont adaptées à injecter à l'intérieur de la troisième lame un faisceau lumineux se propageant dans la troisième lame par réflexion totale sur les faces inférieure et supérieure de la troisième lame.

Selon un mode de réalisation, lesdites sources lumineuses sont des diodes électroluminescentes.

Selon un mode de réalisation, chaque région d'extraction lumineuse comprend, gravé sur la face de la troisième lame tournée vers la chambre, un réseau de diffraction ou tout autre motif adapté à découpler, vers l'extérieur de la troisième lame, de la lumière se propageant à l'intérieure de cette lame.

Selon un mode de réalisation, le dispositif de détection comporte en outre un ou plusieurs détecteurs optiques disposés en regard d'une ou plusieurs faces latérales de la première lame.

Selon un mode de réalisation, les détecteurs optiques sont adaptés à mesurer un rayonnement lumineux en provenance des plots, se propageant dans la première lame par réflexion totale sur les faces inférieure et supérieure de la première lame.

Selon un mode de réalisation, chaque détecteur optique comprend un photomultiplicateur.

Selon un mode de réalisation, les deuxième et troisième lames transparentes sont confondues.

Selon un mode de réalisation, les première, deuxième et troisième lames transparentes sont en PMMA.

Selon un mode de réalisation, les plots ont une forme elliptique ou rectangulaire.

Selon un mode de réalisation, le dispositif de détection comporte plusieurs plots en des matériaux sonde distincts, permettant de détecter la présence éventuelle de substances distinctes dans le fluide.

Selon un mode de réalisation, le dispositif de détection comporte en outre un ou plusieurs plots permettant de détecter la présence d'une substance donnée dans le fluide dont la sensibilité et la limite de détection de la substance donnée augmentent avec la surface totale des plots.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe illustrant de façon schématique un exemple d'un mode de réalisation d'un dispositif d'analyse d'un fluide ; et
la figure 2 est une vue en coupe illustrant de façon schématique une variante de réalisation du dispositif d'analyse de la figure 1.

### Description détaillée

De mêmes éléments ont été désignés par de mêmes références aux différentes figures et, de plus, les diverses figures ne sont pas tracées à l'échelle. Par souci de clarté, seuls les éléments qui sont utiles à la compréhension des modes de réalisation décrits ont été représentés et sont détaillés. En particulier, le choix du ou des matériaux des plots sondes et les types de réaction cible-sonde mises en œuvre dans les dispositifs d'analyse proposés ne sont pas détaillés, les modes de réalisation décrits étant compatibles avec la plupart des couples cible-sonde utilisés dans les méthodes d'analyse connues basées sur la mesure des propriétés optiques d'un plot sonde placé en contact avec un fluide à analyser. Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures, étant entendu que, dans la pratique, les dispositifs décrits peuvent être orientés différemment. Sauf précision contraire, les expressions "approximativement", "sensiblement", et "de l'ordre de" signifient à 10 % près, de préférence à 5 % près, ou à 10° près, de préférence à 5° près lorsqu'elles font référence à des valeurs ou orientations angulaires.

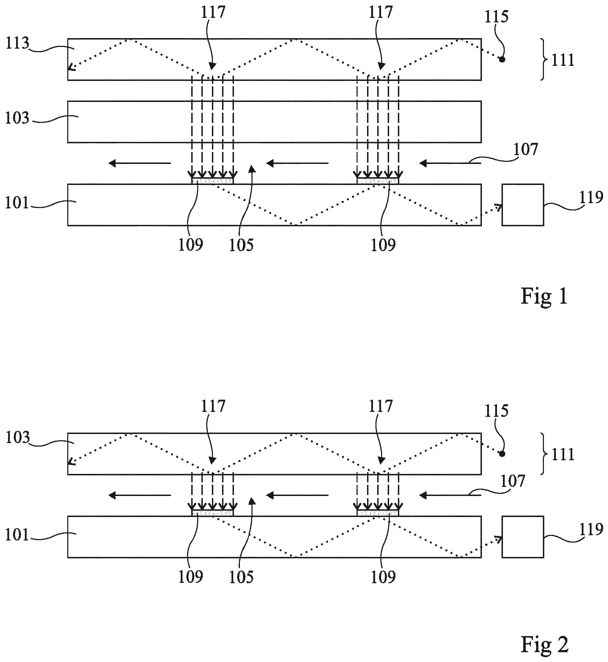

La figure 1 est une vue en coupe illustrant de façon schématique un exemple d'un mode de réalisation d'un dispositif d'analyse d'un fluide.

Le dispositif d'analyse de la figure 1 comprend deux lames transparentes 101 et 103 sensiblement parallèles, par exemple en verre ou en plastique, délimitant une chambre 105 destinée à contenir un fluide 107 à analyser. Dans l'exemple représenté, les faces principales des lames 101 et 103 sont disposées dans des plans sensiblement horizontaux, la lame 101 étant disposée sous et en regard de la lame 103. Un joint périphérique non représenté peut faire interface entre les lames 101 et 103 pour maintenir un écart entre les lames 101 et 103 et assurer l'étanchéité de la chambre 105. La chambre 105 fait par exemple partie d'un circuit fluidique comportant une ou plusieurs pompes et/ou une ou plusieurs électrovannes, non représentées. A titre d'exemple, chacune des lames 101 et 103 a une épaisseur comprise entre 0,1 et 2 mm. En vue de dessus (non représentée), la surface de la chambre 105 est par exemple comprise entre 1 et 100 cm2. L'épaisseur de la chambre 105, c'est-à-dire la distance entre les lames 101 et 103 est par exemple comprise entre 0,1 et 1 mm.

Le dispositif d'analyse de la figure 1 comprend en outre, sur et en contact avec la face intérieure de la lame 101, c'est-à-dire sa face tournée vers l'intérieur de la chambre 105, à savoir sa face supérieure dans l'exemple représenté, un ou plusieurs plots 109 en un matériau sonde adapté à réagir avec une substance cible dont on cherche à détecter la présence éventuelle dans le fluide, de manière à modifier les propriétés optiques des plots, par exemple leur absorbance, leur fluorescence ou leur phosphorescence. A titre d'exemple, et comme cela a été représenté sur la figure 1, le dispositif d'analyse comprend plusieurs plots 109 disjoints occupant une partie seulement de la surface de la lame 101 en vis-à-vis de la chambre 105. A titre de variante, le dispositif d'analyse comprend un plot 109 unique occupant une partie seulement de la surface de la lame 101 en vis-à-vis de la chambre 105. A titre de variante, le dispositif d'analyse comprend un plot 109 unique occupant toute la surface de la lame 101 en vis-à-vis de la chambre 105. L'épaisseur des plots 109 est par exemple comprise entre 1 nm et 1 µm. La surface et la forme des plots peuvent être choisies librement en fonction des besoins de l'application, étant entendu que, en règle générale, plus la surface des plots 109 est importante, plus l'on peut détecter des concentrations faibles de la substance cible.

Le dispositif d'analyse de la figure 1 comprend de plus un dispositif d'éclairage 111 comportant une troisième lame transparente 113, par exemple en verre ou en plastique, sensiblement parallèle aux lames 101 et 103. La lame 113 est placée du côté de lame 103 opposé à la chambre 105, c'est-à-dire au-dessus de la lame 103 dans l'orientation de la figure 1, sensiblement en vis-à-vis de la chambre 105. La lame 113 peut être placée en contact avec la lame 103, ou à distance de la lame 103, par exemple à une distance comprise entre 0,1 et 10 millimètres de la lame 103. A titre d'exemple, la lame 113 a une épaisseur comprise entre 0,1 et 10 mm, et une surface (en vue de dessus) sensiblement identique à celle de la chambre 105. Le dispositif d'éclairage 111 comprend en outre une ou plusieurs sources lumineuses 115, par exemple des diodes électroluminescentes, placées en regard d'une ou plusieurs des faces latérales (ou flancs) de la lame 113, adaptées pour injecter de la lumière à l'intérieur de la lame 113. Lorsque la source lumineuse 115 est allumée, de la lumière émise par la source 115 se propage à l'intérieur de la lame 113 par réflexion totale sur les faces supérieure et inférieure de la lame 113. La face de la lame 113 tournée vers la chambre 105, c'est-à-dire sa face inférieure dans l'orientation de la figure 1, comprend des régions microstructurées 117 définissant des régions d'extraction lumineuse. Dans les régions 117, les microstructurations de la face inférieure de la lame 113 sont adaptées à provoquer l'extraction, en direction de la chambre 105, d'une partie de la lumière provenant de la source 115 et se propageant dans la lame 113. La lumière ainsi extraite de la lame 113 vient éclairer la chambre 105 à travers la lame transparente 103. Chaque région 117 comprend par exemple un réseau de diffraction adapté à extraire de la lame 113, selon une direction déterminée, une partie de la lumière émise par la source 115. En dehors des régions d'extraction 117, la face inférieure de la lame 113 est par exemple sensiblement lisse, mais peut également être opacifiée. Les régions 117 sont agencées de façon que chaque plot 109 revêtant la face supérieure de la lame 101 soit en vis-à-vis d'une région d'extraction 117, et reçoive un flux lumineux en provenance de la source 115 lorsque cette dernière est allumée. Les microstructurations des régions 117 sont par exemple (mais non limitativement) telles que, au niveau des régions 117, la lumière en provenance de la source 115 soit extraite de la lame 113 selon une direction sensiblement orthogonale à la lame 113.

Le dispositif d'analyse de la figure 1 comprend en outre un ou plusieurs détecteurs optiques ou photodétecteurs 119, par exemple des photomultiplicateurs, placés en regard d'une ou plusieurs des faces latérales de la lame 101, adaptés à mesurer un rayonnement lumineux en provenance des faces latérales de la lame 101.

Le fonctionnement du dispositif d'analyse de la figure 1 est le suivant. Le fluide 107 est analysé de façon statique ou dynamique dans la chambre 105, en contact avec les plots sondes 109. Les propriétés optiques des plots 109, et notamment leur absorbance, leur fluorescence et/ou leur phosphorescence, ainsi que leurs évolutions dans le temps, sont alors représentatives de la présence ou non et/ou de la concentration de la substance cible que l'on cherche à détecter dans le fluide 107. Le dispositif d'éclairage 111 et le détecteur 119 sont utilisés pour détecter une éventuelle modification des propriétés optiques des plots 109. Plus particulièrement, le dispositif d'éclairage 111 est commandé pour éclairer les plots 109 au travers de la lame 103 et de la chambre 105, et le détecteur optique 119 est utilisé pour analyser les propriétés optiques des plots 109, à partir des rayonnements lumineux transmis par les plots 109 dans la lame transparente 101.

Dans le cas où les plots 109 deviennent fluorescents ou phosphorescents en présence de la substance cible, les plots 109 absorbent tout ou partie de la lumière qu'ils reçoivent de la source 115, et, sous l'effet de ce rayonnement d'excitation, émettent un rayonnement lumineux, généralement à une longueur d'onde distincte de la longueur d'onde d'excitation. Une partie de ce rayonnement se propage à l'intérieur de la lame transparente 101 par réflexion totale sur les faces inférieure et supérieure de la lame 101, et est transmise au détecteur 119. Le détecteur 119 peut être configuré pour mesurer ce rayonnement et en déduire la présence ou non et/ou la concentration de la substance cible dans le fluide 107.

Dans le cas où l'interaction cible-sonde se traduit par une modification de l'absorbance des plots 109, le détecteur 109 peut être configuré pour détecter le résidu du rayonnement lumineux d'excitation transmis par les plots 109 à l'intérieur de la lame 101.

Selon le type de mesure effectué, des filtres optiques peuvent être disposés devant la source lumineuse d'excitation 115 et/ou devant le détecteur optique 119.

Le motif lumineux produit par le dispositif d'éclairage 111 est tel que seuls les plots 109 (et non la partie de la surface supérieure de la lame 101 non revêtue par les plots 109) soient éclairés par la lumière en provenance de la source d'excitation 115. Ceci permet de maximiser la sensibilité du dispositif d'analyse, en limitant la quantité de lumière parasite, c'est-à-dire de lumière ne provenant pas des plots 109, transmise au détecteur 119. A titre d'exemple, pour chaque plot 109 disposé sur la face supérieure de la lame 101, la lame 113 comprend une région micro-structurée 117 de forme et de dimensions sensiblement identiques à celles du plot 109, disposée sensiblement en vis-à-vis du plot 109 de manière à éclairer sensiblement toute la surface du plot 109 mais uniquement la surface du plot 109. Pour tenir compte d'une éventuelle divergence du faisceau émis au niveau de la région micro-structurée 117, les dimensions de la région micro-structurée 117 peuvent éventuellement être légèrement inférieures à celles du plot 109, par exemple comprises entre 0,8 et 1 fois les dimensions du plot 109.

Les matériaux constituant les lames 101, 103 et 113 sont de préférence choisis pour présenter un faible niveau d'auto-fluorescence. A titre d'exemple, les lames 101, 103 et/ou 113 sont en verre borosilicaté, par exemple en verre BK7 (dénomination commerciale) ou en verre B1664 (dénomination commerciale). A titre de variante, les lames 101, 103 et/ou 113 sont en un matériau plastique tel que le polyméthacrylate de méthyle (PMMA).

Un avantage du mode de réalisation de la figure 1 réside dans la compacité du dispositif d'éclairage 111 et dans le fait que ce type de dispositif permet de réaliser des motifs d'éclairage de formes et de dimensions variées. En effet, les formes et les dimensions des régions d'extraction micro-structurées 117 de la lame 113, qui définissent les formes et les dimensions du motif lumineux d'excitation éclairant la chambre 105, peuvent être définis avec beaucoup de liberté pour s'adapter aux besoins de l'application, et notamment pour épouser au plus près les formes des plots 109. En particulier, des motifs lumineux de formes rectangulaires ou elliptiques peuvent être définis, par exemple dans le cas où les plots 109 ont des formes rectangulaires ou elliptiques. De tels motifs lumineux pourraient difficilement être obtenus avec des dispositifs d'éclairage traditionnels, sauf à utiliser des systèmes optiques avec un agencement complexe de composants, comprenant notamment des masques définissant la forme des faisceaux.

Un autre avantage du dispositif proposé est qu'il permet de prévoir des motifs d'éclairage présentant des surfaces relativement importantes, disposées en regard de plots sensiblement de mêmes surfaces. Un problème qui peut en effet se poser dans les dispositifs d'analyse optique est qu'il existe une densité de puissance d'éclairage maximale au-delà de laquelle les molécules des plots sondes risquent d'être endommagées. Augmenter la surface des plots et la surface des motifs d'éclairage correspondants permet d'augmenter la sensibilité du dispositif sans augmenter la densité de puissance d'éclairage des plots.

La figure 2 est une vue en coupe illustrant de façon schématique une variante de réalisation du dispositif d'analyse fluidique de la figure 1. Le dispositif de la figure 2 comprend de nombreux éléments communs avec le dispositif de la figure 1. Ces éléments ne seront pas détaillés à nouveau ci-après. Dans la suite, seules les différences entre le dispositif de la figure 1 et le dispositif de la figure 2 seront mises en exergue.

Le dispositif de la figure 2 diffère du dispositif de la figure 1 en ce que, dans le dispositif de la figure 2, les lames transparentes 103 et 113 (figure 1) sont confondues en une lame transparente unique (référencée 103 sur la figure 2). En d'autres termes, dans l'exemple de la figure 2, la lame du dispositif d'éclairage 111 forme également la paroi supérieure de la chambre fluidique 105. Un avantage de l'agencement de la figure 2 est qu'il permet de gagner encore en compacité par rapport à l'agencement de la figure 1. En outre, l'agencement de la figure 2 permet de rapprocher des plots 109 les régions d'extraction lumineuse 117 du dispositif d'éclairage 111.

Outre les avantages susmentionnés, un avantage des modes de réalisation décrits en relation avec les figure 1 et 2 est qu'ils sont compatibles avec des procédés de fabrication industrielle à bas cout, par exemple des procédés de type "Roll to Roll" (de l'anglais rouleau à rouleau), ou R2R, consistant à fabriquer un grand nombre de dispositifs fluidiques et/ou optiques et/ou électroniques identiques ou similaires à partir d'un ou plusieurs rouleaux de films souples ou flexibles, films que l'on vient rouler à nouveau une fois les principales étapes de fabrication réalisées, de façon à obtenir un rouleau de sortie comprenant une pluralité de dispositifs pouvant être individualisés par découpe du rouleau de sortie. A titre d'exemple, les lames 101, 103, et 113 dans le cas de la figure 1, peuvent se présenter initialement sous la forme de rouleaux de films transparents, par exemple du PMMA. Les plots 109 peuvent être déposés sur la face supérieure du film 101, par exemple par des techniques d'impression, de sérigraphie, de jet d'encre, de goutte à goutte (drop-spotting en anglais), puis des joints périphériques (non représentés) peuvent être disposés sur la face supérieure du film 101 pour délimiter les chambres d'analyse 105. Le film 103 peut ensuite être superposé au film 101 pour fermer les chambres 105. Les structurations des régions d'extraction lumineuse 117 du dispositif d'éclairage 111 sont par exemple réalisées au moyen d'un faisceau laser sur la face inférieure du film 103 ou 113. Dans l'exemple de la figure 1, le film supérieur 113 du dispositif d'éclairage 111 est superposé au film 103. Une fois les plots 109 et les régions d'extraction 117 réalisées, et les films 101, 103 et, le cas échéant, 113, superposés, l'assemblage peut être enroulé pour former un rouleau de sortie. Les sources lumineuses 115 et les détecteurs optiques 119 sont par exemple ajoutés après découpe du rouleau de sortie en dispositifs individuels.

Des modes de réalisation particuliers ont été décrits. Diverses variantes et modifications apparaîtront à l'homme de l'art. En particulier, les modes de réalisation décrits ne se limitent pas aux exemples décrits ci-dessus de dimensions et de matériaux.

De plus, on a décrit ci-dessus des exemples de réalisation dans lesquels les lames 103 et 101 délimitant la chambre fluidique 105 sont sensiblement parallèles. Les modes de réalisation décrits ne se limitent pas à ce cas particulier. A titre de variante, on peut prévoir d'incliner la lame 103 par rapport à la lame 101, par exemple d'un angle compris typiquement entre 1 et 30 degrés, pour minimiser la quantité de lumière incidente d'excitation qui serait susceptible d'arriver au détecteur 119 sans passer par les plots 109.

Par ailleurs, l'homme de l'art saura adapter les modes de réalisation décrits pour réaliser un dispositif d'analyse permettant de détecter plusieurs substances distinctes dans le fluide 107. Dans ce cas, des plots sondes de natures différentes peuvent être prévus sur la surface de la lame 101. Les lames revêtues de plots de sondes différentes pourront être séparées par des joints optiques pour individualiser les contributions optiques d'un plot sonde dédié à la détection d'une substance donnée. Plusieurs sources 115 distinctes peuvent alors être prévues pour éclairer les différents plots, notamment si les longueurs d'onde d'excitation des différents plots ne sont pas les mêmes. De plus, plusieurs détecteurs 119 distincts peuvent être prévus pour mesurer les signaux lumineux émis par les différents plots, notamment si les longueurs d'onde d'émission des différents plots ne sont pas les mêmes. Pour effectuer la mesure en présence de plots avec une sonde mais également pour discriminer les signaux lumineux en provenance des plots avec des sondes différentes, des filtres optiques et/ou un fonctionnement alterné des sources lumineuses et/ou des détecteurs peuvent être prévus.

## Revendications

1. Dispositif de détection d'une substance dans un fluide (107), comportant :
des première (101) et deuxième (103) lames transparentes délimitant une chambre (105) destinée à contenir le fluide (107) ;
sur la face intérieure de la première lame (101), un ou plusieurs plots (109) d'un matériau sonde dont les propriétés optiques varient en fonction de la concentration d'une substance cible dont on cherche à détecter la présence éventuelle dans le fluide (107) ; et
un dispositif d'éclairage (111) comportant une troisième lame transparente (113 ; 103) sensiblement parallèle à la première lame (101) et disposée du côté de la chambre (105) opposé à la première lame (101), caractérisé en ce q'une
face de ladite troisième lame transparente (113 ; 103) qui est tournée vers la première lame (101) comporte une ou plusieurs régions microstructurées d'extraction lumineuse (117) localisées en vis-à-vis des plots (109), et en ce que le motif lumineux produit par ledit dispositif d'éclairage (111) est tel que seuls les plots (109) soient éclairés par la lumière en provenance de la source d'excitation (115).

2. Dispositif de détection selon la revendication 1, dans lequel le dispositif d'éclairage (111) comprend une ou plusieurs sources lumineuses (115) disposées en regard d'une ou plusieurs faces latérales de la troisième lame (113 ; 103).

3. Dispositif de détection selon la revendication 2, dans lequel lesdites sources lumineuses (115) sont adaptées à injecter à l'intérieur de la troisième lame (113 ; 103) un faisceau lumineux se propageant dans la troisième lame (113 ; 103) par réflexion totale sur les faces inférieure et supérieure de la troisième lame (113 ; 103).

4. Dispositif de détection selon la revendication 2 ou 3, dans lequel lesdites sources lumineuses (115) sont des diodes électroluminescentes.

5. Dispositif de détection selon l'une quelconque des revendications 1 à 4, dans lequel chaque région d'extraction lumineuse (117) comprend, gravé sur la face de la troisième lame (113 ; 103) tournée vers la chambre (105), un réseau de diffraction ou tout autre motif adapté à découpler, vers l'extérieur de la troisième lame (113 ; 103), de la lumière se propageant à l'intérieure de cette lame.

6. Dispositif de détection selon l'une quelconque des revendications 1 à 5, comportant en outre un ou plusieurs détecteurs optiques (119) disposés en regard d'une ou plusieurs faces latérales de la première lame (101).

7. Dispositif de détection selon la revendication 6, dans lequel lesdits détecteurs optiques (119) sont adaptés à mesurer un rayonnement lumineux en provenance des plots (109), se propageant dans la première lame (101) par réflexion totale sur les faces inférieure et supérieure de la première lame (101).

8. Dispositif de détection selon la revendication 6 ou 7, dans lequel chaque détecteur optique (119) comprend un photomultiplicateur.

9. Dispositif de détection selon l'une quelconque des revendications 1 à 8, dans lequel les deuxième (103) et troisième (113) lames transparentes sont confondues.

10. Dispositif de détection selon l'une quelconque des revendications 1 à 9, dans lequel les première (101), deuxième (103) et troisième (113 ; 103) lames transparentes sont en PMMA.

11. Dispositif de détection selon l'une quelconque des revendications 1 à 10, dans lequel les plots (109) ont une forme elliptique ou rectangulaire.

12. Dispositif de détection selon l'une quelconque des revendications 1 à 11, comportant plusieurs plots (109) en des matériaux sondes distincts, permettant de détecter la présence éventuelle de substances distinctes dans le fluide (107).

13. Dispositif de détection selon l'une quelconque des revendications 1 à 11, comportant un ou plusieurs plots (109) permettant de détecter la présence d'une substance donnée dans le fluide (107) dont la sensibilité et la limite de détection de la substance donnée augmentent avec la surface totale des plots.

14. Dispositif de détection selon l'une quelconque des revendications 1 à 13, dans lequel, en dehors des régions microstructurée d'extraction lumineuse (117), la face de la troisième lame (113 ; 103) tournée vers la première lame (101) est lisse ou opacifiée.

15. Dispositif selon l'une quelconque des revendications 1 à 14, dans lequel, pour chaque plot (109) disposé sur la face intérieure de la première lame (101), la troisième lame (113 ; 103) comprend une région microstructurée d'extraction lumineuse (117) de forme et de dimensions sensiblement identiques à celles du plot (109), disposée sensiblement en vis-à-vis du plot (109).

## Patentansprüche

1. Vorrichtung zum Detektieren einer Substanz in einem Fluid (107), wobei die Vorrichtung Folgendes aufweist:
eine erste (101) und eine zweite (103) transparente Platte, die eine Kammer (105) begrenzen, die dazu bestimmt ist, das Fluid (107) zu enthalten;
auf der Innenfläche der ersten Platte (101) einen oder mehrere Flecken (109) aus einem Sondenmaterial mit optischen Eigenschaften, die in Abhängigkeit von der Konzentration einer Zielsubstanz variieren, deren mögliches Vorhandensein in dem Fluid (107) nachgewiesen werden soll; und
eine Beleuchtungsvorrichtung (111), die eine dritte transparente Platte (113; 103) aufweist, die im Wesentlichen parallel zu der ersten Platte (101) ist und auf der der ersten Platte (101) gegenüberliegenden Seite der Kammer (105) angeordnet ist, **dadurch gekennzeichnet, dass** eine Oberfläche der dritten transparenten Platte (113; 103), die der ersten Platte (101) zugewandt ist, einen oder mehrere mikrostrukturierte Lichtextraktionsbereiche (117) aufweist, die vor den Flecken (109) angeordnet sind, und dass das von der Beleuchtungsvorrichtung (111) erzeugte Lichtmuster so beschaffen ist, dass nur die Flecken (109) durch das von der Anregungsquelle (115) stammende Licht beleuchtet werden.

2. Detektionsvorrichtung nach Anspruch 1, wobei die Beleuchtungsvorrichtung (111) eine oder mehrere Lichtquellen (115) aufweist, die vor einer oder mehreren Seitenflächen der dritten Platte (113; 103) angeordnet sind.

3. Detektionsvorrichtung nach Anspruch 2, wobei die Lichtquellen (115) geeignet sind, einen sich in der dritten Platte (113; 103) ausbreitenden Lichtstrahl durch Totalreflexion an den unteren und oberen Flächen der dritten Platte (113; 103) in die dritte Platte (113; 103) einzukoppeln.

4. Detektionsvorrichtung nach Anspruch 2 oder 3, wobei die Lichtquellen (115) lichtemittierende Dioden sind.

5. Detektionsvorrichtung nach einem der Ansprüche 1 bis 4, wobei jeder Lichtextraktionsbereich (117) auf der der Kammer (105) zugewandten Oberfläche der dritten Platte (113; 103) ein Beugungsgitter oder ein anderes Muster aufweist, das geeignet ist, das sich im Inneren der dritten Platte (113; 103) ausbreitende Licht nach außen auszukoppeln.

6. Detektionsvorrichtung nach einem der Ansprüche 1 bis 5, ferner mit einem oder mehreren optischen Sensoren (119), die vor einer oder mehreren Seitenflächen der ersten Platte (101) angeordnet sind.

7. Detektionsvorrichtung nach Anspruch 6, wobei die optischen Sensoren (119) dazu ausgelegt sind, eine von den Kontaktflächen (109) ausgehende Lichtstrahlung zu messen, die sich in der ersten Platte (101) durch Totalreflexion an den unteren und oberen Oberflächen der ersten Platte (101) ausbreitet.

8. Detektionsvorrichtung nach Anspruch 6 oder 7, wobei jeder optische Sensor (119) einen Lichtmultiplizierer aufweist.

9. Detektionsvorrichtung nach einem der Ansprüche 1 bis 8, wobei die zweite (103) und die dritte (113) transparente Platte miteinander verschmolzen sind.

10. Detektionsvorrichtung nach einem der Ansprüche 1 bis 9, wobei die erste (101), zweite (103) und dritte (113; 103) transparente Platte aus PMMA hergestellt sind.

11. Detektionsvorrichtung nach einem der Ansprüche 1 bis 10, wobei die Flecken (109) eine elliptische oder rechteckige Form aufweisen.

12. Detektionsvorrichtung nach einem der Ansprüche 1 bis 11, wobei die Vorrichtung eine Vielzahl von Flecken (109) aufweist, und zwar aus unterschiedlichen Sondenmaterialien, die es ermöglichen, das mögliche Vorhandensein verschiedener Substanzen in dem Fluid (107) zu erkennen.

13. Detektionsvorrichtung nach einem der Ansprüche 1 bis 11, wobei die Vorrichtung einen oder mehrere Flecken (109) aufweist, die es ermöglichen, das Vorhandensein einer bestimmten Substanz in dem Fluid (107) zu detektieren, wobei die Empfindlichkeit und die Detektionsgrenze der bestimmten Substanz mit der Gesamtoberfläche der Flecken zunehmen.

14. Detektionsvorrichtung nach einem der Ansprüche 1 bis 13, wobei die Oberfläche der dritten Platte (113; 103), die der ersten Platte (101) zugewandt ist, außerhalb der mikrostrukturierten Lichtextraktionsbereiche (117) glatt oder trübe ist.

15. Vorrichtung nach einem der Ansprüche 1 bis 14, wobei die dritte Platte (113; 103) für jeden auf der Unterseite der ersten Platte (101) angeordneten Flecken (109) einen mikrostrukturierten Lichtextraktionsbereich (117) aufweist, der eine Form und Abmessungen aufweist, die im Wesentlichen mit denen der Flecken (109) identisch sind, und der im Wesentlichen vor dem Flecken (109) angeordnet ist.

## Claims

1. Device of detection of a substance in a fluid (107), comprising:
first (101) and second (103) transparent plates delimiting a chamber (105) intended to contain the fluid (107) ;
on the inner surface of the first plate (101), one or a plurality of pads (109) of a probe material having optical properties varying according to the concentration of a target substance, the possible presence of which in the fluid (107) is desired to be detected; and
an illumination device (111) comprising a third transparent plate (113; 103) substantially parallel to the first plate (101) and arranged on the side of the chamber (105) opposite to the first plate (101), **characterized in that** a surface of said third transparent plate (113; 103) which faces the first plate (101) comprises one or a plurality of microstructured light extraction regions (117) located in front of the pads (109), and **in that** the light pattern generated by said illumination device (111) is such that only the pads (109) are illuminated by the light originating from the excitation source (115).

2. Detection device according to claim 1, wherein the illumination device (111) comprises one or a plurality of light sources (115) arranged in front of one or a plurality of lateral surfaces of the third plate (113; 103).

3. Detection device according to claim 2, wherein said light sources (115) are adapted to injecting into the third plate (113; 103) a light beam propagating in the third plate (113; 103) by total reflection on the lower and upper surfaces of the third plate (113; 103).

4. Detection device according to claim 2 or 3, wherein said light sources (115) are light-emitting diodes.

5. Detection device according to any of claims 1 to 4, wherein each light extraction region (117) comprises, etched on the surface of the third plate (113; 103) facing the chamber (105), a diffraction grating or any other pattern adapted to decoupling, towards the outside of the third plate (113; 103), light propagating inside of this plate.

6. Detection device according to any of claims 1 to 5, further comprising one or a plurality of optical detectors (119) arranged in front of one or a plurality of lateral surfaces of the first plate (101).

7. Detection device according to claim 6, wherein said optical sensors (119) are adapted to measuring a light radiation originating from the pads (109), propagating in the first plate (101) by total reflection on the lower and upper surfaces of the first plate (101).

8. Detection device according to claim 6 or 7, wherein each optical sensor (119) comprises a photomultiplier.

9. Detection device according to any of claims 1 to 8, where the second (103) and third (113) transparent plates are confounded.

10. Detection device according to any of claims 1 to 9, wherein the first (101), second (103), and third (113; 103) transparent plates are made of PMMA.

11. Detection device according to any of claims 1 to 10, wherein the pads (109) have an elliptic or rectangular shape.

12. Detection device according to any of claims 1 to 11, comprising a plurality of pads (109) made of different probe materials, enabling to detect the possible presence of distinct substances in the fluid (107) .

13. Detection device according to any of claims 1 to 11, comprising one or a plurality of pads (109) enabling to detect the presence of a given substance in the fluid (107) having a sensitivity and a limit of detection of the given substance increasing with the total surface area of the pads.

14. Detection device according to any of claims 1 to 13, wherein, outside of the microstructured light extraction regions (117), the surface of the third plate (113; 103) facing the first plate (101) is smooth or opacified.

15. Device according to any of claims 1 to 14, wherein, for each pad (109) arranged on the lower surface of the first plate (101), the third plate (113; 103) comprises a microstructured light extraction region (117) having a shape and dimensions substantially identical to those of the pad (109), arranged substantially in front of the pad (109).
